# DEMANDE DE BREVET EUROPEEN

(11) **EP 3 855 379 A1**
(43) Date de publication de la demande: **28.07.2021**
(21) Numéro de dépôt: 21151206.6
(22) Date de dépôt: 12.01.2021
(51) Int. Cl.: G06Q 20/14, G06Q 20/32, G06Q 20/34, G07F 17/20, G06Q 20/12, G07F 15/12, G06Q 20/18

(54) **PROCÉDÉ DE PAIEMENT SANS CONTACT D'UNE PRESTATION DÉLIVRÉE PAR UNE INSTALLATION ET IMPLIQUANT UN PARAMÈTRE QUANTIFIABLE ET MESURABLE**

(30) Priorité: 27.01.2020 FR 2000784
(71) Demandeur: Financière Clairac, 75116 Paris (FR)
(72) Inventeur: BROUCHET, Yves, 67000 STRASBOURG (FR)
(74) Mandataire: Littolff, Denis

(57) **Abrégé**

Procédé de paiement sans contact par un utilisateur d'une prestation exécutée par une installation et liée à la mesure de l'évolution quantitative d'un paramètre, ladite mesure étant réalisée par une unité de gestion électronique de l'installation reliée à une interface munie d'organes de commande et de contrôle, ledit paiement s'effectuant à l'aide de moyens de paiement sans contacts incluant des données financières propres à l'utilisateur, l'installation comportant des moyens d'appairage entre l'unité de gestion électronique et les moyens de paiement sans contact, et des moyens de transfert d'informations avec un serveur distant.

## Description

La présente invention concerne un procédé de paiement sans contact sur un site ou une installation offrant une prestation comportant un paramètre dont l'évolution est quantifiable et mesurable, par exemple le temps, un volume etc. Cette prestation doit être facturable de manière précise, en adéquation avec la mesure évolutive réelle du paramètre, et de préférence d'un montant réduit. Selon une application possible, il peut s'agir du temps de lavage/nettoyage de véhicules dans une station de lavage, exemple qui sera principalement utilisé dans la suite du texte pour rendre les explications plus intelligibles et concrètes, mais qui n'est pas limitatif de l'invention.

Dans la plupart des situations dans lesquelles le client se voit proposer une prestation en échange d'un paiement, il existe une interaction physique entre lui et les installations permettant la réalisation de la prestation, même dans l'hypothèse d'un paiement avec traitement monétique dématérialisé, c'est-à-dire lorsque la prestation est réglée de manière électronique, informatique et télématique en lien avec un moyen de paiement de type carte bancaire réalisant la transaction associée.

Ainsi, dans le cadre des stations de lavage, pour payer la prestation de lavage, le conducteur du véhicule doit interagir avec un coffret situé sur une piste de la station via une interface utilisateur, pour démarrer le service souhaité et, préalablement, pour mettre en place les conditions de la transaction financière qui autorise ce démarrage. Le concept à la base de l'invention est de rendre cette opération plus immédiate et plus facile, en supprimant tout contact et toute manipulation sur les installations offrant le service requis. En somme, les opérations financières préliminaires, nécessaires à l'obtention d'un droit d'usage permettant la réalisation de la prestation sont mises en œuvre avec un caractère d'immédiateté et sans interaction physique avec le site.

Le paiement sans contact existe depuis quelques années et est assez largement utilisé dans certains domaines, notamment lors de l'établissement et de la réalisation d'une transaction avec un commerçant (par exemple à la caisse d'un supermarché), lorsque celui-ci est équipé du matériel adéquat, à savoir un TPE (terminal de paiement électronique), en général pour des montants n'excédant pas 30 €. Il y a, dans ce cas, validation du montant de la transaction, tel que renseigné par l'opérateur chez le commerçant, par passage de la carte à proximité du terminal. Dans cet exemple, le montant précis est connu et introduit manuellement dans le système monétique.

A l'inverse, dans l'hypothèse de l'invention, le montant n'est pas connu, puisque le montant de la transaction doit être adapté avec précision et en temps réel à l'évolution de la mesure du paramètre sur lequel la transaction financière repose. C'est le problème qui est posé en relation avec l'invention : trouver une solution technique pour que la transaction puisse être débitée en correspondance directe avec la quantité de prestation obtenue, quel que soit le paramètre mesuré, qu'il s'agisse de temps, pour une durée de lavage ou d'aspiration dans l'exemple préférentiel de l'invention, de masse, de volume ou de tout autre paramètre mesurable. En d'autres termes, il faut que le démarrage de la transaction, effectuée avec le moyen de paiement sans contact, ouvre une ligne de crédit, et que la fin de la même transaction soit pilotée par l'arrêt de la « distribution » de prestation par l'installation.

Pour en revenir aux stations de lavage de véhicules telles qu'elles fonctionnent actuellement, les paiements sont dans la plupart des cas forfaitisés (pièces, jetons...), ou réalisés par utilisation classique de cartes bancaires insérées dans un lecteur, avec code à taper sur un clavier, ou encore par clés propriétaires contenant un montant virtuel rechargeable, elles-mêmes (ré)alimentées par carte bancaire. Lorsqu'il y a un guichet avec un agent sur place, ce qui n'est que rarement le cas, il peut évidemment y avoir un paiement sans contact avec carte et terminal TPE, à l'issue de l'exécution de la prestation.

Pour apporter une réponse technique à la question du paiement sans contact proportionnel à la quantité de paramètre consommé, correspondant par conséquent à une prestation individualisée, l'invention propose en somme un procédé de paiement sans contact par un utilisateur d'une prestation exécutée par une installation et liée à la mesure de l'évolution quantitative d'un paramètre, ladite mesure étant réalisée par une unité de gestion électronique de l'installation reliée à une interface munie d'organes de commande et de contrôle. Ledit paiement s'effectue à l'aide de moyens de paiement sans contacts incluant des données financières propres à l'utilisateur, l'installation comportant en outre des moyens d'appairage entre l'unité de gestion électronique et les moyens de paiement sans contact, et des moyens de transfert d'informations avec un serveur distant.

Ce procédé comporte les étapes suivantes :
Placement de l'installation dans un état de disponibilité au paiement sans contact permettant son activation en mode de paiement sans contact pour l'exécution de la prestation ;
Après détection d'un appairage entre l'installation et le moyen de paiement sans contact, démarrage d'un décompte temporel accompagnant une phase d'obtention d'autorisation d'exécution de la prestation basée sur les données financières propres à l'utilisateur ;
Si l'autorisation n'est pas obtenue à la fin du décompte temporel, modification de l'état de l'installation de l'état de disponibilité au paiement sans contact en un état désactivé ;
Sinon, mise en mode détection de l'actionnement d'un organe de commande débutant la prestation, et démarrant une mesure de l'évolution du paramètre à la base de la prestation exécutée ;
Dès détection de l'actionnement de l'organe de commande débutant la prestation, activation concomitante d'un étage monétique de l'unité de gestion électronique attribuant un coût unitaire à une fraction de la prestation exécutée et calculant en temps réel un total instantané par incrémentation des fractions de prestation exécutées selon l'évolution mesurée du paramètre ;
Détection de l'actionnement d'un organe de commande de l'arrêt de la prestation stoppant l'exécution de la prestation, l'étage monétique calculant un total final correspondant au coût réel de la prestation.

Ainsi, selon le procédé de l'invention, il est possible de disposer des avantages du paiement sans contact sans l'inconvénient du montant forfaitaire ou du paiement a posteriori : l'utilisateur est débité du montant correspondant exactement à la consommation du paramètre à la base de la prestation, selon une échelle de paiement prédéfinie, par exemple par le propriétaire ou le gérant de l'installation. Dans l'exemple qui constitue le fil conducteur de l'invention, le conducteur du véhicule est débité du montant précis de la prestation de lavage réalisée, fonction du temps d'exécution de la prestation.

Il est à noter que le procédé peut comporter l'attribution à l'installation d'un identifiant unique, qui peut s'avérer utile dans les échanges d'informations entre les moyens de paiement sans contact et l'installation proprement dite, et sont en tout état de cause indispensables à l'établissement d'une gestion analytique d'une pluralité d'installation. Les moyens pratiques d'attribuer un tel identifiant peuvent prendre la forme d'un codage unique, sous une forme qui sera précisée dans la suite.

Une phase décisive du procédé consiste bien entendu en l'obtention initiale de l'autorisation bancaire, ce qui implique que les échanges d'informations incluent les coordonnées bancaires de l'utilisateur du service. En amont, il est donc nécessaire que soient effectuées :
- la détermination des coordonnées bancaires de l'utilisateur ;
- la génération d'une requête d'utilisation de ladite installation en mode de paiement sans contact en vue de l'exécution de la prestation, ladite requête comprenant les coordonnées bancaires de l'utilisateur ;
- l'envoi de ladite requête au serveur distant pour déclencher l'autorisation d'utilisation en retour ;
- la réception de l'autorisation permettant la validation de l'actionnement d'un organe de commande débutant la prestation.

Un tel serveur distant est en général un serveur bancaire, ou doit in fine être mis en communication avec un serveur bancaire, qui est en mesure de réconcilier les informations d'ordre personnel qui lui sont transmises, relatives au titulaire des moyens de paiement sans contact, avec les informations bancaires qui lui sont propres, c'est-à-dire les coordonnées d'un compte bancaire et les informations financières actualisées relatives à ce compte.

Les informations financières précitées ne sont pas limitées aux coordonnées bancaires, puisque celles-ci ne sont pas forcément nécessaires, lorsque les moyens de paiement sans contact gèrent un porte-monnaie virtuel incluant une somme d'argent par exemple prépayée par l'utilisateur. Le débit ne se fait alors pas sur un compte bancaire de l'utilisateur, mais sur un autre compte sur lequel la somme prépayée est identifiée.

Selon une possibilité, le procédé de l'invention procède à la détermination des coordonnées bancaires de l'utilisateur par échange d'informations selon un protocole de communication de courte portée, de type NFC (Near Field Communication, ou communication en champ proche), entre un moyen de paiement sans contact de type carte bancaire et un terminal de paiement automatisé (TPA) intégré à l'installation. Cette détermination s'effectue après détection de l'activation d'un organe de commande de ladite installation autorisant le mode de paiement sans contact, plaçant de fait l'installation dans ledit état de disponibilité au paiement sans contact. En pratique, cette détermination des coordonnées bancaires de l'utilisateur a lieu lors du passage de la carte au voisinage du terminal de paiement automatisé.

Dans l'installation, l'utilisateur actionne par exemple au moyen d'un bouton de commande dédié le mode « paiement sans contact », qui génère ensuite l'activation par le TPA d'un champ de type NFC (Near Field Communication, ou communication en champ proche) permettant la lecture des coordonnées bancaires contenues par la carte de paiement. L'intégration d'un TPA à l'installation permet des échanges d'informations bancaires classiques, le traitement propre à ladite installation, dans le cadre du procédé, visant à permettre un paiement au centime près de la prestation, ou plus généralement au coût unitaire attribué à la fraction de prestation exécutée près.

Selon une alternative, la détermination des coordonnées bancaires de l'utilisateur peut s'effectuer parallèlement à un échange d'informations toujours selon un protocole de communication de courte portée, de type Bluetooth Low Energy, entre l'installation et un moyen de paiement sans contact de type smartphone, tablette ou équivalent, doté d'une application de gestion de l'installation permettant un paiement sans contact et renseignée avec les identifiants de la carte bancaire. Cet échange d'informations place l'installation dans l'état de disponibilité au paiement sans contact, cette fois par appairage entre l'installation et le smartphone. Dans cette hypothèse, les coordonnées bancaires constituant les données financières de l'utilisateur restent sur le smartphone, et ne sont pas transmises à l'installation. C'est le smartphone qui se charge des communications distantes, s'il y a lieu. L'échange d'informations par appairage permet le placement de l'installation dans l'état de disponibilité au paiement sans contact.

L'appairage proprement dit s'effectue par échanges d'informations sur des identifiants respectifs du moyen de paiement sans contact et de l'installation :
- après lecture par le moyen de paiement sans contact d'un code graphique apparent sur l'installation, de type code barre ou QR code, constituant son identifiant unique, ou
- après renseignement de l'équivalent alphanumérique dudit code graphique, apparent sur l'installation et constituant son identifiant unique.

Le fonctionnement est dans ce dernier cas très similaire à celui qui résulte de l'utilisation d'une carte bancaire et d'un TPA, le placement de l'installation dans un état de disponibilité au paiement sans contact pour l'exécution de la prestation obéissant cependant à des modalités un peu différentes, nécessitant un identifiant de l'installation, dont on a souligné qu'il est au surplus utile à une gestion du fonctionnement de ladite installation.

En fait, dans l'invention, l'étage monétique de l'unité de gestion électronique de l'installation débute de préférence son calcul à partir d'un montant forfaitaire prédéterminé auquel il ajoute en temps réel les coûts unitaires correspondants aux fractions de prestation exécutées pour obtenir le total instantané, l'étage monétique transformant le total instantané en le total final après détection de l'actionnement de l'organe de commande de l'arrêt de la prestation stoppant l'exécution de la prestation.

Ces modalités de calcul permettent de coller à la réalité de la consommation liée à la prestation réalisée, c'est-à-dire à l'évolution quantitative du paramètre mesuré dans le cadre de ladite prestation lorsqu'elle est exécutée par l'installation.

De préférence encore, ledit étage monétique de l'unité de gestion électronique de l'installation compare en permanence le total instantané avec une valeur supérieure seuil, stoppe l'exécution de la prestation lorsque cette valeur seuil est atteinte, et la transforme en le total final. Dans le cadre d'un paiement sans contact, ces caractéristiques peuvent permettre de rester sous un seuil de transaction financière échappant à des vérifications contraignantes.

Pour terminer, dans le cadre du procédé de l'invention, dont on rappelle qu'il a pour finalité un paiement dématérialisé d'une prestation, ce total final est transféré à destination du serveur distant, en vue de la finalisation la transaction par débit de ce montant sur un compte de l'utilisateur correspondant aux coordonnées bancaires fournies.

Comme déjà mentionné, mais en liaison plus précise avec la terminologie utilisée pour décrire les caractéristiques du procédé de l'invention, l'installation peut être une station de lavage de véhicule, et le paramètre mesuré peut dès lors être le temps d'actionnement de moyens de lavage de l'extérieur de véhicules ou de moyens de nettoyage intérieur desdits véhicules, en particulier d'aspiration de surfaces internes des véhicules.

L'invention va à présent être décrite plus en détail, en référence aux figures annexées qui concernent l'exemple préférentiel ci-dessus, sans que celui-ci ne puisse être considéré comme exhaustif de l'invention, figures pour lesquelles :
- La figure 1 est un organigramme du fonctionnement du système lors du paiement sans contact avec carte bancaire, en lien avec une prestation délivrée par une station de lavage de véhicules ;
- La figure 2 représente de manière très schématisée le parcours client d'un utilisateur d'une telle station désirant payer par carte bancaire en sans contact ; et
- La figure 3 montre un tel parcours client dans l'hypothèse d'un paiement par smartphone et application intégrée audit smartphone.

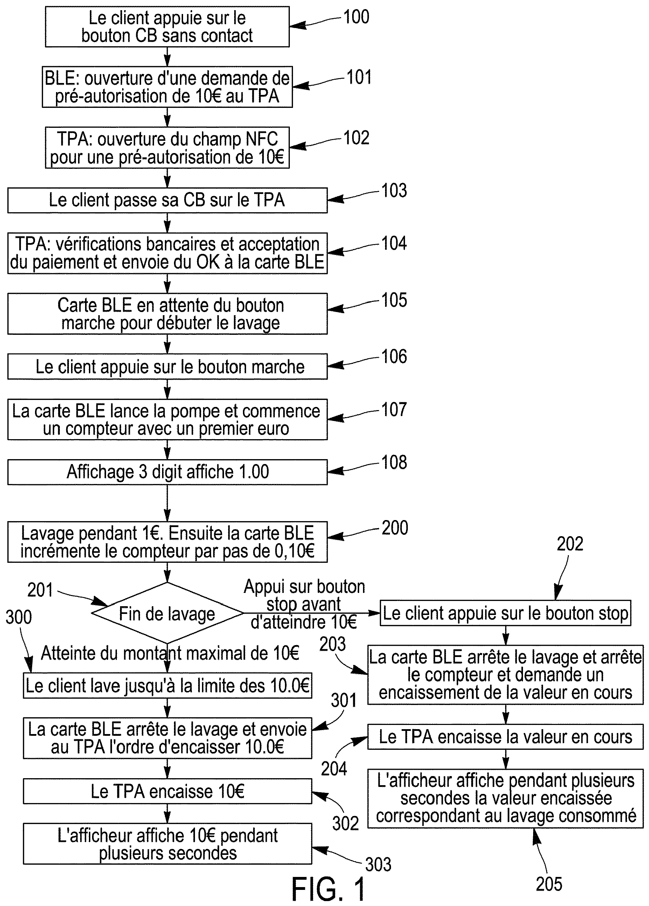

En référence à la figure 1, le procédé de paiement sans contact s'applique en l'occurrence à une prestation de type lavage de véhicule dans une station de lavage comportant des pistes de lavage individualisées, chacune munie d'un coffret de piste intégrant une unité de gestion électronique. Ce coffret présente une façade munie d'organes de commande et de contrôle constituant une interface homme-machine classique permettant de gérer différentes opérations en lien avec le lavage du véhicule (démarrage de l'opération de lavage, arrêt, sélection des étapes du programme de lavage etc.). Ce coffret gère également les fonctions liées à la monétique de manière générale, autorisant le client à régler un montant financier en échange de la prestation. Outre les moyens existants, dans la plupart des cas un monnayeur réceptionnant des pièces de monnaie ou des jetons et un lecteur de clé rechargeable (par exemple par carte bancaire au moyen d'un lecteur classique placé dans une borne et propre à chaque station) stockant des unités financières dématérialisées, le paiement peut s'effectuer, selon l'invention, à l'aide de moyens de paiement de type carte bancaire opérant sans contact. Dans ce cas, l'usage de la carte n'est pas tributaire d'un lecteur de carte avec fente d'insertion et clavier de renseignement du code de la carte, mais coopère avec un terminal de paiement automatisé (TPA) qui doit lui-même être relié à l'unité de gestion électronique du coffret, laquelle est le cas échéant reliée à des moyens de gestion électronique de l'ensemble de la station de lavage.

Les phases du procédé de paiement tel qu'appliqué apparaissent plus particulièrement en figure 1, et montrent très généralement les étapes suivantes :
Actionnement d'un organe de commande ouvrant une session de paiement sans contact ;
Sélection du fonctionnement « paiement sans contact » dans un étage monétique de l'unité de gestion électronique du coffret, pour un montant limité à 10 € ;
Actionnement du TPA ;
Passage de la carte bancaire sur le TPA ;
Vérification, le cas échéant bancaire, par échange avec un opérateur bancaire distant via le TPA pour un montant maximal de 10 € ;
si le retour est positif, mise en mode détection de l'activation d'un organe de commande du début de lavage par l'unité électronique de gestion du coffret ;
dès la détection du début du lavage, comptage en temps réel par l'étage monétique - lié à la gestion électronique du coffret - du temps de lavage écoulé et affichage en temps réel du coût correspondant ;
si la détection de l'arrêt du lavage intervient avant d'arriver aux 10 €, l'étage monétique demande l'encaissement de la valeur finale, calculée par l'étage monétique et notamment affichée au moment de l'arrêt ;
sinon, le lavage est arrêté lorsque le comptage arrive à 10 €, et le système procède à l'encaissement de cette somme.

Plus précisément, en référence à cette figure 1, l'utilisateur commence par sélectionner le mode de paiement (100) par appui sur un bouton approprié. Une carte (dite BLE) ou un étage électronique spécifique qui gère la monétique dans l'unité de gestion électronique du coffret ouvre une session (101) avec paiement sans contact et préparation d'une requête à l'adresse du TPA pour une dépense maximale de 10 €. Les coordonnées bancaires de l'utilisateur sont ensuite obtenues, via activation du TPA (102) en mode communicationnel de courte portée de type NFC, puis par passage de la carte bancaire à proximité du TPA (103).

Le TPA engage les vérifications d'usage (104), et avertit l'étage monétique de l'unité de gestion électronique du coffret du retour positif, quand c'est le cas. Il est à noter que l'étape de vérification/autorisation n'implique pas nécessairement un échange avec un serveur bancaire distant, qui n'est pas systématique, notamment du fait du montant réduit. Mais il y a nécessairement un échange pour l'obtention d'une autorisation, qui peut être refusée si la carte vient par exemple d'être utilisée pour des transactions successives sans contact, impliquant le passage par une transaction avec introduction du code de la carte. Ladite unité électronique passe alors en mode détection du démarrage d'un cycle de lavage (105), et dès qu'un appui sur le bouton de démarrage d'un tel cycle survient (106), lance les opérations par exemple en actionnant la pompe envoyant du liquide sous pression à une lance de lavage, si l'opération de lavage en utilise, et démarre en même temps un comptage temporel (107) correspondant à une somme forfaitaire par exemple d'un Euro (1 €) couvrant une première phase de lavage. Un affichage en temps réel (108) du montant facturé est disponible via un afficheur constituant un des organes de commande et de contrôle placés dans la façade du coffret et mentionnés auparavant.

Le cycle de lavage a débuté, d'abord pour une durée correspondant au montant initial d'un Euro affiché, puis de manière incrémentale par exemple par segments temporels correspondant à des pas de 0,10 € (200). Le total provisoire s'affiche en temps réel. L'unité de gestion électronique du coffret teste en permanence l'activation de la pompe, c'est-à-dire la continuation du cycle de lavage (201). Dans l'hypothèse d'une fin de lavage, résultant de l'appui par le client sur un bouton stop équipant la façade du coffret (202), l'étage monétique de l'unité électronique arrête la pompe, donc le lavage, stoppe le comptage et envoie une demande d'encaissement du total final ainsi obtenu (203). Le TPA procède à l'encaissement de la valeur du total final (204) calculé. L'afficheur de la façade continue d'afficher pendant un certain temps ladite valeur (205). L'utilisateur a donc tout loisir de maîtriser sa dépense. Il est in fine exactement débité de ce montant total final.

Il peut également arriver que l'utilisateur dépense la totalité de la somme initialement allouée, c'est-à-dire les 10 € (300). Dans ce cas, c'est l'unité électronique, à l'issue d'un décomptage aboutissant à cette valeur de 10 €, qui arrête le cycle de lavage en stoppant la pompe (301): elle envoie concomitamment au TPA une information d'encaissement d'un tel montant de 10 €. Le TPA procède à l'encaissement de cette somme (302), que l'afficheur continue d'afficher pendant quelques temps (303).

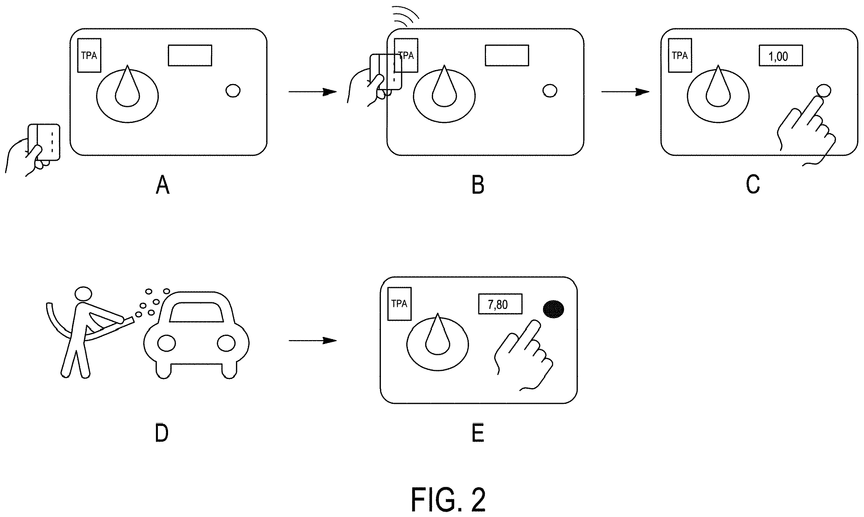

Ce « parcours » monétique du client est très brièvement résumé en figure 2, sans faire figurer les opérations internes et notamment les transferts d'informations entre les cartes et étages électroniques, et avec les périphériques tels que les boutons de commande et le TPA, qui ne sont évidemment pas apparents pour le client. En A, l'utilisateur présente sa carte bancaire devant et à proximité du TPA, jusqu'à acceptation du paiement en B.

Dès lors que ce mode de paiement est accepté, l'installation, en l'occurrence principalement matérialisée par le coffret et la lance de lavage, passe en mode « paiement sans contact » et attend le démarrage du cycle de lavage, obtenu par appui sur un bouton marche en C, pour une durée correspondant au moins à la mise financière initiale de 1 €. L'utilisateur procède en D au lavage de son véhicule, en l'espèce en manipulant la lance de lavage à haute pression autour et à proximité de la carrosserie du véhicule.

Dès qu'il a terminé le lavage ou souhaite l'arrêter, l'utilisateur appuie sur un bouton stop en E. Le montant précis apparaît dans l'afficheur, ici pour une valeur de 7,80 €. C'est ce montant précis qui lui est débité à l'issue de la transaction effectuée sans contact via la carte bancaire.

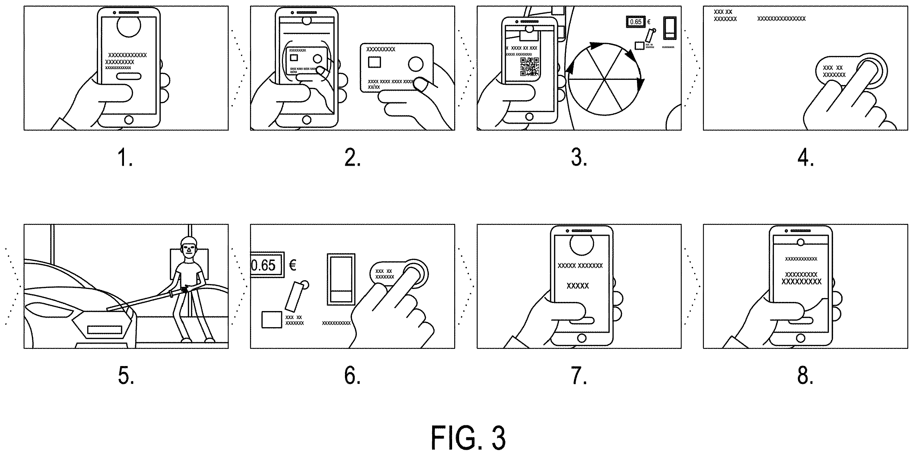

En termes de paiement sans contact, le « parcours » client est très similaire avec un smartphone. Il est illustré en figure 3. De fait, le parcours de paiement proprement dit ne commence pas avant l'étape 3., puisqu'il faut préalablement télécharger sur le smartphone l'application spécifique dédiée à la prestation, puis y créer un compte en 1., et enfin renseigner les informations propres à la carte bancaire de l'utilisateur du smartphone en 2. A l'arrivée sur la piste de la station de lavage, début du trajet client proprement dit, l'appairage smartphone/coffret doit être effectué, ce qui s'effectue par exemple par scannage d'un QR code apparaissant en façade dudit coffret, en 3. Cet appairage place de fait le coffret en mode paiement sans contact, et l'unité de gestion électronique et son étage monétique sont dès lors prêts à gérer un cycle de lavage lié à un mode de paiement sans contact avec un smartphone. Le début du cycle, comme pour le paiement par carte bancaire et TPA, dépend d'un actionnement du bouton marche équipant la façade du coffret, en 4.

Le lavage démarre et se poursuit en 5. jusqu'à appui sur un bouton stop en 6. Le montant de la transaction apparaît aussi sur un afficheur prévu dans la façade du coffret. Le débit de cette somme est ou sera normalement effectué et il apparaît en temps réel sur le smartphone qui est en communication avec le coffret via une liaison à courte portée par exemple suivant le protocole de communication Bluetooth Low Energy, comme montré en 7. Additionnellement, d'autres intérêts d'une solution logicielle avec une application dédiée apparaissent en 8., puisqu'il est par exemple possible d'obtenir des points fidélité à chaque passage de l'utilisateur dans un centre de lavage. Les échanges d'informations entre le client final et le prestataire de service peuvent d'ailleurs prendre de nombreuses formes du fait de l'existence d'une application sur son smartphone, et du fait de la géolocalisation possible d'une part du smartphone et d'autre part du centre de lavage : rappel d'avantages commerciaux quand le client passe à portée du centre, offres promotionnelles etc.

Les avantages du paiement sans contact permis par les solutions de l'invention sont multiples autant pour les utilisateurs finaux dont le parcours est simplifié et rendu plus rapide que pour les exploitants gérant les installations dotées de l'invention, qui peuvent disposer d'informations susceptibles d'enrichir leur connaissance du fonctionnement de leurs installations et ainsi de les optimiser.

Les exemples ci-dessus ne peuvent pas être considérés comme exhaustifs de l'invention, qui peut au contraire englober des variantes aux caractéristiques techniques soulignées auparavant, par exemple concernant les moyens et organes de commande et de contrôle associés aux coffrets, ou concernant les moyens de codage de l'identifiant unique de l'installation/du coffret, etc.

## Revendications

1. Procédé de paiement sans contact par un utilisateur d'une prestation exécutée par une installation et liée à la mesure de l'évolution quantitative d'un paramètre, ladite mesure étant réalisée par une unité de gestion électronique de l'installation reliée à une interface munie d'organes de commande et de contrôle, ledit paiement s'effectuant à l'aide de moyens de paiement sans contacts incluant des données financières propres à l'utilisateur, l'installation comportant des moyens d'appairage entre l'unité de gestion électronique et les moyens de paiement sans contact, et des moyens de transfert d'informations avec un serveur distant, le procédé comportant les étapes suivantes :
- Placement de l'installation dans un état de disponibilité au paiement sans contact permettant son activation en mode de paiement sans contact pour l'exécution de la prestation ;
- Après détection d'un appairage entre l'installation et le moyen de paiement sans contact, démarrage d'un décompte temporel accompagnant une phase d'obtention d'une autorisation d'exécution de la prestation basée sur les données financières propres à l'utilisateur ;
- Si l'autorisation n'est pas obtenue à la fin du décompte temporel, modification de l'état de l'installation de l'état de disponibilité au paiement sans contact en un état désactivé ;
- Sinon, mise en mode détection de l'actionnement d'un organe de commande débutant la prestation, et démarrant une mesure de l'évolution du paramètre à la base de la prestation exécutée ;
- Dès détection de l'actionnement de l'organe de commande débutant la prestation, activation concomitante d'un étage monétique de l'unité de gestion électronique attribuant un coût unitaire à une fraction de la prestation exécutée et calculant en temps réel un total instantané par incrémentation des fractions de prestation exécutées selon l'évolution mesurée du paramètre ;
- Détection de l'actionnement d'un organe de commande de l'arrêt de la prestation stoppant l'exécution de la prestation, l'étage monétique calculant un total final correspondant au coût réel de la prestation.

2. Procédé de paiement selon la revendication précédente, **caractérisé par** l'attribution à l'installation d'un identifiant unique.

3. Procédé de paiement selon l'une des revendications précédentes, **caractérisé par** :
- la détermination des coordonnées bancaires de l'utilisateur ;
- la génération d'une requête d'utilisation de ladite installation en mode de paiement sans contact en vue de l'exécution de la prestation, ladite requête comprenant les coordonnées bancaires de l'utilisateur ;
- l'envoi de ladite requête au serveur distant pour déclencher l'autorisation d'utilisation en retour ;
- la réception de l'autorisation permettant la validation de l'actionnement d'un organe de commande débutant la prestation.

4. Procédé de paiement selon la revendication précédente, **caractérisé par** la détermination des coordonnées bancaires de l'utilisateur par échange d'informations selon un protocole de communication de courte portée, de type NFC (Near Field Communication, ou communication en champ proche), entre un moyen de paiement sans contact de type carte bancaire et un terminal de paiement automatisé (TPA) intégré à l'installation, après détection de l'activation d'un organe de commande de ladite installation autorisant le mode de paiement sans contact et plaçant l'installation dans ledit état de disponibilité au paiement sans contact.

5. Procédé de paiement selon la revendication 3, **caractérisé par** la détermination des coordonnées bancaires de l'utilisateur parallèlement à un échange d'informations selon un protocole de communication de courte portée, de type de type Bluetooth Low Energy, entre l'installation et un moyen de paiement sans contact de type smartphone, tablette ou équivalent, doté d'une application de gestion de l'installation permettant un paiement sans contact et renseignée avec les identifiants de la carte bancaire, plaçant l'installation dans l'état de disponibilité au paiement sans contact par appairage entre l'installation et le smartphone.

6. Procédé de paiement selon la revendication précédente, **caractérisé en ce que** l'appairage s'effectue par échanges d'informations sur des identifiants respectifs du moyen de paiement sans contact et de l'installation :
- après lecture par le moyen de paiement sans contact d'un code graphique apparent sur l'installation, de type code barre ou QR code, constituant son identifiant unique, ou
- après renseignement de l'équivalent alphanumérique dudit code graphique, apparent sur l'installation et constituant son identifiant unique.

7. Procédé de paiement selon l'une des revendications précédentes, **caractérisé en ce que** l'étage monétique de l'unité de gestion électronique de l'installation débute son calcul à partir d'un montant forfaitaire prédéterminé auquel il ajoute en temps réel les coûts unitaires correspondants aux fractions de prestation exécutées pour obtenir le total instantané, l'étage monétique transformant le total instantané en le total final après détection de l'actionnement de l'organe de commande de l'arrêt de la prestation stoppant l'exécution de la prestation.

8. Procédé de paiement selon la revendication précédente, **caractérisé en ce que** l'étage monétique de l'unité de gestion électronique de l'installation compare en permanence le total instantané avec une valeur supérieure seuil, stoppe l'exécution de la prestation lorsque ladite valeur seuil est atteinte, et la transforme en le total final.

9. Procédé de paiement selon l'une des revendications 7 et 8, **caractérisé par** le transfert du total final à destination du serveur distant en vue de la finalisation de la transaction par débit de ce montant d'une somme disponible sur un compte de l'utilisateur correspondant aux données financières propres à l'utilisateur.

10. Procédé de paiement selon l'une des revendications précédentes, **caractérisé en ce que** l'installation est une station de lavage de véhicule, et **en ce que** le paramètre mesuré est le temps d'actionnement de moyens de lavage de l'extérieur de véhicules ou de moyens de nettoyage intérieur desdits véhicules.
